# EUROPEAN PATENT APPLICATION

(11) **EP 4 415 414 A1**
(43) Date of publication of application: **14.08.2024**
(21) Application number: 24150120.4
(22) Date of filing: 02.01.2024
(51) Int. Cl.: H04W 24/02, H04L 41/0833, H04W 36/16

(54) **POLICY RELATED TO COMMUNICATION OF A TERMINAL IN A CELLULAR NETWORK DEPENDING ON UTILIZATION STATUS OF RENEWABLE ENERGY**

(30) Priority: 09.02.2023 JP 2023018553
(71) Applicant: TOYOTA JIDOSHA KABUSHIKI KAISHA, Toyota-shi, Aichi-ken, 471-8571 (JP)
(72) Inventor: SHAO, Xiao, Toyota-shi, Aichi-ken, 471-8571 (JP)
(74) Representative: Simmons & Simmons

(57) **Abstract**

An information processing method includes acquiring, by a first component (11, 3A, 12) of a cellular network, information indicating a utilization status of renewable energy in operation of the cellular network, and changing, by a second component (11k) of the cellular network, a policy related to communication of a terminal connected to the cellular network depending on the information indicating the utilization status of the renewable energy.

## Description

### BACKGROUND OF THE INVENTION

### 1. Field of the Invention

The present disclosure relates to an information processing method, an information processing system, and a non-transitory storage medium.

### 2. Description of Related Art

There is a technology of dynamically distributing data processing according to electric power generated by renewable energy among a plurality of data centers (e.g., Japanese Unexamined Patent Application Publication No. 2021-189845 (JP 2021-189845 A)). There is another technology described in Green energy driven cellular networks with JT CoMP technique, Abu Jahida, Abdullah Bin Shams, Md. Farhad Hossain, Physical Communication Volume 28, June 2018, Pages 58-68. There is also a technology described in Sustainable communication and networking in two-tier green cellular networks, Zhongming Zheng; Xiaoxia Zhang; LinX Cai; Ran Zhang; Xuemin Shen; IEEE Wireless Communications (Volume: 21, Issue: 4, August 2014).

### SUMMARY OF THE INVENTION

The present disclosure provides an information processing method, an information processing system, and a non-transitory storage medium that allow renewable energy to be suitably used for terminal communication.

An information processing method according to a first aspect of the present disclosure includes acquiring, by a first component of a cellular network, information indicating a utilization status of renewable energy in operation of the cellular network, and changing, by a second component of the cellular network, a policy related to communication of a terminal connected to the cellular network depending on the information indicating the utilization status of the renewable energy.

The information processing method according to the first aspect of the present disclosure may further include giving, by the first component, a notification to the second component when a value indicating the utilization status of the renewable energy is higher than a threshold, and changing, by the second component, at least one of communication parameters included in the policy to a value that corresponds to the value indicating the utilization status of the renewable energy in response to the notification.

The information processing method according to the first aspect of the present disclosure may further include giving, by the first component, a notification to the second component when a value indicating the utilization status of the renewable energy is lower than a threshold, and changing, by the second component, at least one of communication parameters included in the policy to a value that corresponds to the value indicating the utilization status of the renewable energy in response to the notification.

In the information processing method according to the first aspect of the present disclosure, the communication parameters may include at least one of a bit rate, priority, necessity of terminal communication monitoring, a delay time, a packet loss rate, and a reporting frequency, regarding the communication of the terminal.

The information processing method according to the first aspect of the present disclosure may further include determining, by the second component, a policy on a route of the communication of the terminal depending on the information indicating the utilization status of the renewable energy.

The information processing method according to the first aspect of the present disclosure may further include determining, by the second component, a policy on a route of the communication of the terminal through the cellular network when determination is made that an available amount or a utilization rate of the renewable energy that is the information indicating the utilization status of the renewable energy is higher than a threshold.

The information processing method according to the first aspect of the present disclosure may further include determining, by the second component, a policy on a route that offloads the communication of the terminal to a non-cellular network when determination is made that an available amount or a utilization rate of the renewable energy that is the information indicating the utilization status of the renewable energy is lower than a threshold.

In the information processing method according to the first aspect of the present disclosure, the first component may be a component configured to operate as a network data analytics function of the cellular network.

In the information processing method according to the first aspect of the present disclosure, the second component may be a component configured to operate as a policy control function of the cellular network.

An information processing system according to a second aspect of the present disclosure includes a first component of a cellular network, and a second component of the cellular network. The first component is configured to acquire information indicating a utilization status of renewable energy in operation of the cellular network. The second component is configured to change a policy related to communication of a terminal connected to the cellular network depending on the information indicating the utilization status of the renewable energy.

In the information processing system according to the second aspect of the present disclosure, the first component may be configured to give a notification to the second component when a value indicating the utilization status of the renewable energy is higher than a threshold. The second component may be configured to change at least one of communication parameters included in the policy to a value corresponding to the value indicating the utilization status of the renewable energy in response to the notification.

In the information processing system according to the second aspect of the present disclosure, the first component may be configured to give a notification to the second component when a value indicating the utilization status of the renewable energy is lower than a threshold. The second component may be configured to change at least one of communication parameters included in the policy to a value corresponding to the value indicating the utilization status of the renewable energy in response to the notification.

In the information processing system according to the second aspect of the present disclosure, the communication parameters may include at least one of a bit rate, priority, necessity of terminal communication monitoring, a delay time, a packet loss rate, and a reporting frequency, regarding the communication of the terminal.

In the information processing system according to the second aspect of the present disclosure, the second component may be configured to determine a policy on a route of the communication of the terminal depending on the information indicating the utilization status of the renewable energy.

In the information processing system according to the second aspect of the present disclosure, the second component may be configured to determine a policy on a route of the communication of the terminal through the cellular network when determination is made that an available amount or a utilization rate of the renewable energy that is the information indicating the utilization status of the renewable energy is higher than a threshold.

In the information processing system according to the second aspect of the present disclosure, the second component may be configured to determine a policy on a route that offloads the communication of the terminal to a non-cellular network when determination is made that an available amount or a utilization rate of the renewable energy that is the information indicating the utilization status of the renewable energy is lower than a threshold.

In the information processing system according to the second aspect of the present disclosure, the first component may be a component configured to operate as a network data analytics function of the cellular network.

In the information processing system according to the second aspect of the present disclosure, the second component may be a component configured to operate as a policy control function of the cellular network.

A non-transitory storage medium according to a third aspect of the present disclosure stores a program for causing an information processing device to operate as the first component in the second aspect.

A non-transitory storage medium according to a fourth aspect of the present disclosure stores a program for causing an information processing device to operate as the second component in the second aspect.

According to the present disclosure, the renewable energy can suitably be used for the terminal communication.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A illustrates a fifth generation mobile communication system network (5G network);
FIG. 1B illustrates data centers;
FIG. 2 illustrates an information processing system;
FIG. 3A shows a configuration example of an information processing device;
FIG. 3B shows a configuration example of a terminal;
FIG. 4 is a sequence diagram of a communication traffic control method;
FIG. 5 is a flowchart showing an example of a process of the information processing device operating as a network data analytics function (NWDAF);
FIG. 6 is a flowchart showing an example of a process of the information processing device or the terminal operating as an external server or user equipment (UE);
FIG. 7 is a sequence diagram showing a process of changing policy and charging control (PCC) rules according to the utilization status of renewable energy;
FIG. 8 is a flowchart showing an example of a process of the NWDAF related to the change of the PCC rules;
FIG. 9 is a flowchart showing an example of a process of a policy control function (PCF) related to the change of the PCC rules; and
FIG. 10 is a flowchart showing an example of a process of the PCF related to determination of user equipment route selection policies (URSP) rules.

### DETAILED DESCRIPTION OF EMBODIMENTS

An information processing method according to an embodiment includes:
(1) acquiring, by a first component of a cellular network, information indicating a utilization status of renewable energy in operation of the cellular network; and
(2) changing, by a second component of the cellular network, a policy related to communication of a terminal connected to the cellular network depending on the information indicating the utilization status of the renewable energy.

With the information processing method, the change of the policy can achieve, regarding the communication of the terminal, a state in which the renewable energy can be used actively and the use of energy other than the renewable energy is reduced. That is, the renewable energy can suitably be used regarding the communication of the terminal.

The renewable energy includes natural energy such as sunlight, solar heat, wind, tide, and ground heat, biomass energy, and recycle energy such as energy from waste.

For example, the cellular network is a 5G network. However, the cellular network may be a network other than the 5G network. The 5G network will be described below as an example of the cellular network. The information indicating the utilization status of the renewable energy is, for example, information indicating the amount of the renewable energy available for operation of the 5G network. Alternatively, the information indicating the utilization status of the renewable energy may be the utilization rate of the renewable energy in the 5G network (ratio of the renewable energy used to the total energy consumed for the operation (percentage of the renewable energy in the consumed energy)). The information indicating the utilization status of the renewable energy may be information other than these.

The following configuration may be adopted for the information processing method. That is, the first component gives a notification to the second component when a value indicating the utilization status of the renewable energy is higher or lower than a threshold. The second component changes at least one of communication parameters included in the policy to a value that corresponds to the value indicating the utilization status of the renewable energy in response to the notification.

The communication parameters may include at least one of a bit rate, priority, necessity of terminal communication monitoring, a delay time, a packet loss rate, and a reporting frequency, regarding the communication of the terminal. The communication parameters may be parameters other than the above examples.

There may be adopted a configuration in which the second component determines a policy on a route of the communication of the terminal depending on the information indicating the utilization status of the renewable energy. For example, the second component determines a policy on a route of the communication of the terminal through the 5G network when determination is made that an available amount or a utilization rate of the renewable energy that is the information indicating the utilization status of the renewable energy is higher than a threshold. Alternatively, the second component determines a policy on a route that offloads the communication of the terminal to a non-5G network when determination is made that the available amount or the utilization rate of the renewable energy that is the information indicating the utilization status of the renewable energy is lower than the threshold.

The first component may be a component configured to operate as an NWDAF of the 5G network. The second component may be a component configured to operate as a PCF of the 5G network.

An information processing device according to an embodiment will be described with reference to the drawings. The configuration of the embodiment is illustrative, and the present disclosure is not limited to the configuration of the embodiment.

### Configuration of Information Processing System

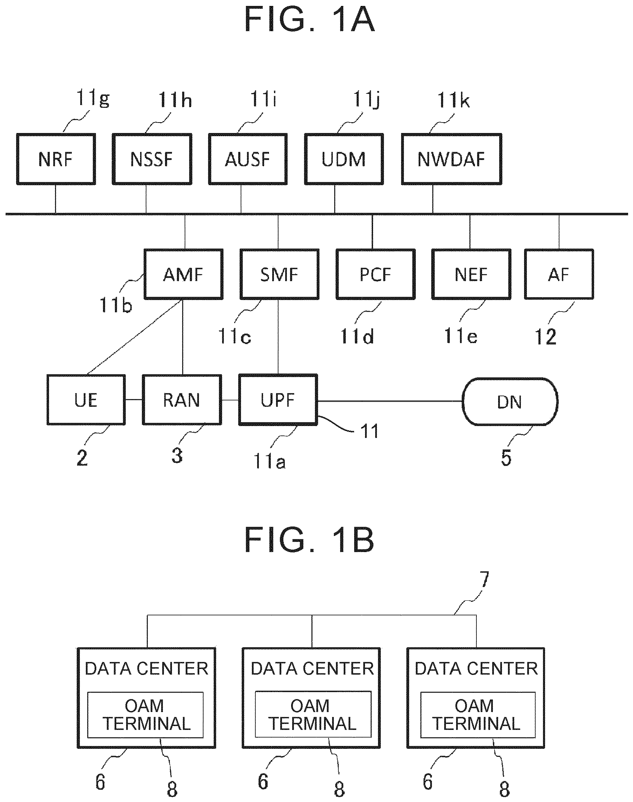

FIG. 1A shows components (constituent elements) of a fifth generation mobile communication system network (5G network). In FIG. 1A, user equipment (UE) 2 is a terminal of a user (subscriber). A radio access network (RAN) 3 is an access network to a 5G core network (5GC). The RAN 3 includes a base station (gNB) 3A. The 5G network consists of the 5G core network (5GC) and an access network ((R)AN), and the UE 2, a data network (DN) 5, and an application function (AF) 12 are connected to the 5G network. Each of network functions (NFs) 11a to 11e, 11g to 11k is a function implemented by one or more computers (information processing devices) executing a program.

The 5GC is composed of a collection of components each having a predetermined function called a network function (NF). FIG. 1A shows the following NFs 11 of the 5GC. In FIG. 1A, the NFs 11 are shown by bold rectangles.
User Plane Function (UPF) 11a
Access and Mobility Management Function (AMF) 1 1b
Session Management Function (SMF) 11c
Policy Control Function (PCF) 11d
Network Exposure Function (NEF) 11e
Network Repository Function (NRF) 11g
Network Slice Selection Function (NSSF) 11h
Authentication Server Function (AUSF) 11i
Unified Data Management (UDM) 11j
Network Data Analytics Function (NWDAF) 11k

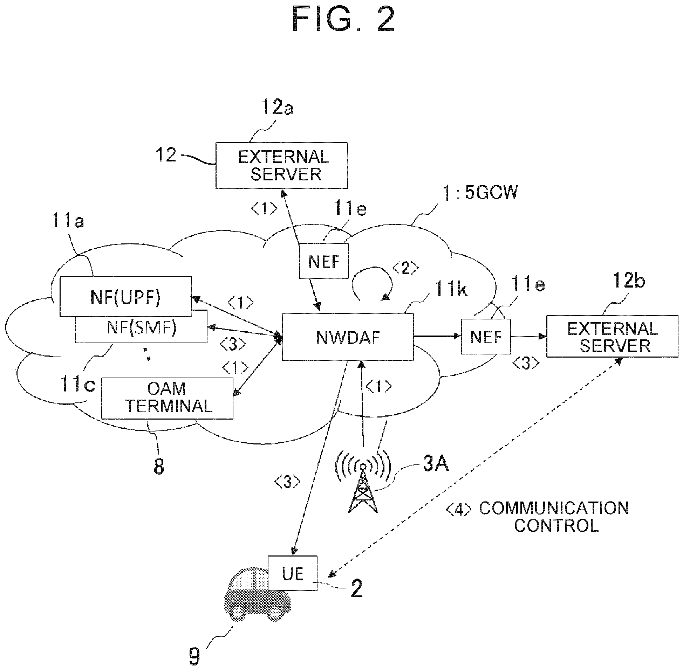

The UPF 11a performs routing and forwarding, inspection, and quality of service (QoS) handling of user packets (user plane packets that are transmitted and received by the UE 2). The AMF 11b is a serving device for the UE 2 in a 5GC 1 (FIG. 2). The AMF 11b accommodates the RAN 3 and performs subscriber authentication, location (mobility) management for the UE 2, etc. The UDM 11j provides subscriber information or acquires, registers, deletes, and changes the state of the UE 2.

The SMF 11c manages protocol data unit (PDU) sessions and controls the UPF 11a to perform QoS control and policy control. The PDU session is a virtual communication channel for data transfer between the UE 2 and the DN 5. The DN 5 is a data network outside the 5GC (such as the Internet).

The PCF 11d performs QoS control, policy control, charging control, etc. under the control of the SMF 11c. In the QoS control, communication quality control such as priority packet transfer is performed. In the policy control, communication control such as QoS, packet transfer handling, charging, etc. based on network or subscriber information is performed. The NEF 11e serves to mediate communication between an external node such as the AF 12 and a node within a control plane. The AF 12 is an application server (external server) outside the 5GC.

The NRF 11g stores and manages information on the NFs (e.g., AMF 11b, SMF 11c, and UPF 11a) within the 5GC 1 (FIG. 2). The NRF 11g can reply to an inquiry source with a plurality of candidate NFs in response to an inquiry regarding the NF desired to be used.

The NSSF 11h has a function to select a network slice to be used by a subscriber from network slices created by network slicing. The network slice is a virtual network having specifications corresponding to the intended use.

The AUSF 11i is a subscriber authentication server that performs subscriber authentication under the control of the AMF 11b. The UDM 11j stores subscriber related information. The NWDAF 11k has a function to collect and analyze data from each NF 11, an operations, administration, and maintenance (OAM) terminal 8 (FIG. 2), an external server 12a (FIG. 2), etc. The NWDAF 11k is an NF that provides network analysis information.

Each NF forming the 5GC is composed of one or more information processing devices (servers, network devices, etc.). The information processing devices are installed in a special building called a data center. The data center is also called an exchange. As shown in FIG. 1B, one or more data centers 6 are located in a 5GC communication area (three data centers 6 are shown as an example in FIG. 1B), and the data centers 6 are connected each other by a communication line 7. Each data center 6 includes the OAM terminal 8. The OAM terminal 8 has a function to operate, administer, and maintain the network (5GC).

A plurality of NFs of the same type may be prepared in the 5GC. For example, an NF 11 may be prepared for each data center 6. Alternatively, one NF 11 may be shared between or among the data centers 6. Alternatively, a plurality of NFs 11 of the same type may be configured in one data center 6. The number of data centers 6, the number of NFs 11, and the correspondence between the NFs 11 and the data centers 6 can be set as appropriate.

FIG. 2 illustrates an information processing system according to the embodiment. The 5GC 1 shown in FIG. 2 has the NFs 11 (11a to 11e, 11g to 11k) shown in FIG. 1A. The UE 2 can wirelessly connect with the base station 3A of the RAN 3 to transfer data to and from a communication partner (DN 5) via the 5GC 1. In the example shown in FIG. 2, the UE 2 is installed in a vehicle 9. However, the UE 2 need not necessarily be in-vehicle equipment. The vehicle 9 may be a vehicle that is driven by a person or an autonomous vehicle.

In the embodiment, part of the electric power for operating the 5G network (5GC 1 and RAN 3), that is, operating the information processing devices forming the 5G network can be covered by renewable energy.

The NWDAF (data analysis unit) 11k collects and analyzes information (utilization status information, an example of first information) indicating the status of renewable energy utilization in the entire 5G network or part of the 5G network. The utilization status information of the renewable energy is at least one of the available amount of renewable energy and the utilization rate of the renewable energy (percentage of the electric power from the renewable energy in the electric power used). The NWDAF 11k transmits information (example of second information) obtained by the analysis to a device (example of a second component) that performs a process related to communication through the 5G network.

The NWDAF 11k can acquire the utilization status information from at least one of the following devices (example of a first component): the NFs 11 (e.g., UPF 11a, SMF 11c, AMF 11b, PCF 11d, and UDM 11j), the base station 3A, and the external server 12a (<1> in FIG. 2). The types of the NFs 11 are not limited to those illustrated above, and may be new NFs.

For example, the utilization status information is acquired by receiving utilization status information that is periodically sent from a provider device. Alternatively, the NWDAF 11k may transmit a request to provide utilization status information, and acquire utilization status information sent from a provider in response to the request. The number of provider devices and the range (unit) of utilization status information possessed by each provider device can be set as appropriate.

The range of the utilization status information is the entire 5G network or part of the 5G network (e.g., in unit of the NFs). The provider of the utilization status information may be the OAM terminal 8. The NWDAF 11k can acquire, from the OAM terminal 8, information indicating: the utilization status of renewable energy in each data center (exchange) 6; and the information processing device installed (accommodated) in the data center 6 (NF 11 corresponding to the information processing device). In this way, the utilization status and the range (area) of communication control can be set as appropriate.

The utilization status information may be information indicating the utilization status in the entire 5G network, or may be information indicating the utilization status in part of the 5G network. The number of provider devices may be one, or may be two or more. The information indicating the utilization status in the entire 5G network may be obtained by aggregating pieces of utilization status information (each indicating the utilization status in part of the 5G network) collected from a plurality of provider devices by the NWDAF 11k.

The NWDAF 11k can collect information on weather forecast (predictions of the amount of solar radiation, wind volume, etc.) from the external server 12a connected to the 5GC via the NEF 11e. The external server 12a is an example of the first component. The weather forecast information is an example of the first information.

The NWDAF 11k uses (analyzes) the collected information (first information) to generate at least one of information indicating the utilization status (available amount and utilization rate of the renewable energy) at a current point in time and information indicating a prediction of the utilization status at a future point in time (<2> in FIG. 2). The number of future points in time (predicted points in time) and the length of time between the predicted points in time (elapsed time from the current point in time) can be set as appropriate. In a case where at least one of the available amount and the utilization rate of the renewable energy in the utilization status at the current point in time is calculated and the utilization status at the future point in time is not predicted, the acquisition of the weather forecast information may be omitted.

The NWDAF 11k transmits information (example of the second information) indicating at least one of the utilization status at the current point in time and the utilization status at the future point in time to a predetermined destination (<3> in FIG. 2). The predetermined destination is, for example, at least one of the following: an external server 12b connected to the NWDAF 11k via the NEF 11e; the UE 2; and a predetermined NF 11. Each of the external server 12b, the UE 2, and the predetermined NF 11 is an example of the "device that performs a process related to communication." The NF 11 is, for example, the UPF 11a, the SMF 11c, the AMF 11b, the PCF 11d, the UDM 11j, etc., but is not limited to these.

Based on the information indicating the utilization status at the current point in time or the future point in time, the NWDAF 11k may transmit, to the predetermined destination, information prompting to increase or reduce the communication traffic through the 5G network. This information may include information specifying a time period during which the communication traffic is to be increased or reduced.

The transmission of the second information can be performed by either the Subscribe-Notify method or the Request-Response method (same as defined in Chapter 6.1 of TS23.288). When the Subscribe-Notify method is used, the transmission of the information prompting to increase the communication traffic (example of the second information) is performed when, for example, the available amount or the utilization rate of the renewable energy becomes higher than a first threshold. The transmission of the information prompting to reduce the communication traffic (example of the second information) is performed when, for example, the available amount or the utilization rate of the renewable energy becomes lower than a second threshold. The first threshold and the second threshold may be the same value or may be different values. Different first thresholds and different second thresholds are prepared for the available amount and the utilization rate. When the Request-Response method is used, the NWDAF 11k transmits the second information to a providing destination in response to a request for the second information from the providing destination.

The external server 12b and the UE 2 can control communication based on the second information (<4> in FIG. 2). For example, the external server 12b that has received the second information increases, in the specified time period, the transmission rate of packets to be transmitted to a downlink, when the received information is the information prompting to increase the communication traffic. Alternatively, the UE 2 that has received the second information increases, in the specified time period, the transmission rate of packets that are transmitted to an uplink.

Increasing the transmission rate increases the number of packets transmitted per unit time. This increases the load of a packet transfer process in packet transfer paths (e.g., base station 3A, UPF 11a, and NEF 11e) in the 5G network, and increases power consumption. The renewable energy can thus be suitably consumed for the packet transfer. When the second information is transmitted, the transmission rates of packets from the external server 12b and the UE 2 are also reduced. In this case, packet transmission may be stopped. This reduces the load of the packet transfer process in the 5G network, and reduces power consumption using energy other than the renewable energy. Increasing or reducing the transmission rate (stopping or resuming communication) in this manner allows efficient consumption of the renewable energy. The information that prompts to increase or reduce the communication traffic may be sent to the NF 11 (e.g., PCF 11d, SMF 11c, or UPF 11a).

### Configuration of Information Processing Device and Terminal

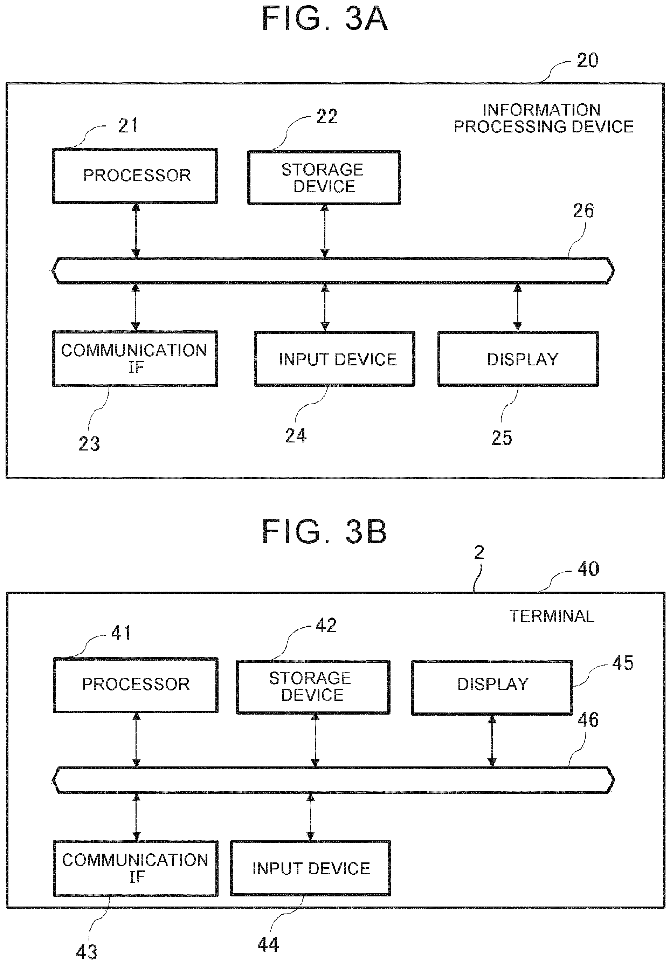

FIG. 3A shows a configuration example of an information processing device 20 that can operate as each of the NFs 11a to 11e, 11g to 11k, the OAM terminal 8, and the external servers 12a, 12b. In FIG. 3A, the information processing device 20 can be composed of a dedicated or general-purpose information processing device (computer) such as a personal computer (PC), a workstation (WS), or a server machine. The information processing device 20 may be a collection of one or more computers (cloud).

The information processing device 20 includes a processor 21 as a processing unit or a control unit (controller), a storage device 22, a communication interface 23 (communication IF 23), an input device 24, and a display 25. These components of the information processing device 20 are connected to each other via a bus 26.

The storage device 22 includes a main storage device and an auxiliary storage device. The main storage device is used as at least one of the following: a storage area for programs and data, a loading area for programs, a work area for programs, and a buffer area for communication data. The main storage device is composed of a random access memory (RAM) or a combination of a RAM and a read-only memory (ROM). The auxiliary storage device is used as a storage area for data and programs. A non-volatile storage medium is applied to the auxiliary storage device. The non-volatile storage medium is, for example, a hard disk drive, a solid state drive (SSD), a flash memory, or an electrically erasable programmable read-only memory (EEPROM). The storage device 22 may include a drive device for a disk recording medium.

The communication IF 23 is a circuit that performs a communication process. For example, the communication IF 23 is a network interface card (NIC). The communication IF 23 may be a wireless communication circuit that performs wireless communication (5G, wireless local area network (LAN) (Wi-Fi), Bluetooth Low Energy (BLE), etc.). The communication IF 23 may be a combination of a circuit that performs a wired communication process and a wireless communication circuit.

The input device 24 includes keys, buttons, a pointing device, a touch panel, etc., and is used to enter information. The display 25 is, for example, a liquid crystal display, and displays information and data.

The processor 21 performs various processes by executing various programs stored in the storage device 22. As the processor 21 executes the programs stored in the storage device 22, the information processing device 20 can operate as each of the NFs 11a to 11e, 11g to 11k, the OAM terminal 8, and the external servers 12a, 12b.

FIG. 3B shows a configuration example of a terminal 40 that can operate as the UE 2. The terminal 40 includes a processor 41, a storage device 42, a communication interface 43 (communication IF 43), an input device 44, and a display 45. These components of the terminal 40 are connected to each other via a bus 46. The same configurations as those of the processor 21, the storage device 22, the communication IF 23, the input device 24, and the display 25 can be used for the processor 41, the storage device 42, the communication IF 43, the input device 44, and the display 45. Therefore, description of these components will be omitted.

The processors 21, 41 are, for example, central processing units (CPUs). The CPU is also referred to as microprocessor unit (MPU). The processors 21, 41 may have a single processor configuration or a multiprocessor configuration. A single physical CPU connected by a single socket may have a multicore configuration. The processors 21, 41 may include arithmetic devices having various circuit configurations, such as a digital signal processor (DSP) or a graphics processing unit (GPU). The processors 21, 41 may have a configuration that cooperates with at least one of the following: an integrated circuit (IC), other digital circuits, and an analog circuit. The integrated circuit includes a large scale integration (LSI), an application-specific integrated circuit (ASIC), and a programmable logic device (PLD). The PLD includes, for example, a field-programmable gate array (FPGA). The processors 21, 41 also include, for example, a microcontroller (MCU), a system-on-a-chip (SoC), a system LSI, or a chipset.

### Examples of Process

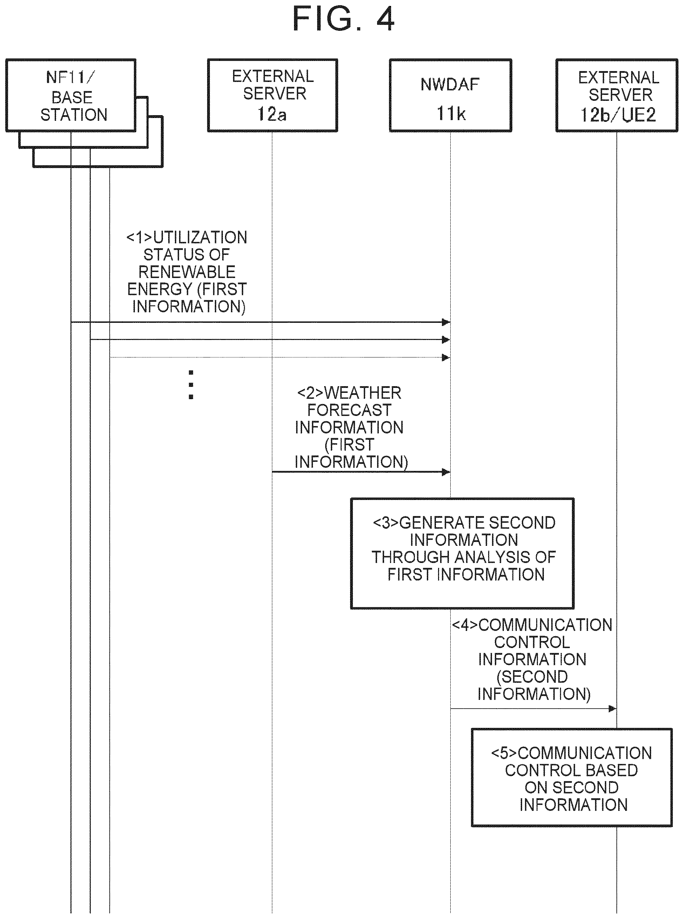

FIG. 4 is a sequence diagram showing an example of a process in the information processing system. Each of a predetermined NF 11 and the base station 3A in the 5GC 1 periodically transmits information (utilization status information) indicating the status of renewable energy utilization held (stored) in the predetermined NF 11 or the base station 3A to the NWDAF 11k (<1> in FIG. 4). The transmission of the utilization status information may be performed in response to a request from the NWDAF 11k.

The external server 12a periodically transmits the weather forecast information held (stored) therein to the NWDAF 11k (<2> in FIG. 4). The transmission of the weather forecast information may be performed in response to a request from the NWDAF 11k. In the case where no prediction is made based on the weather forecast information, reception of the weather forecast information may be omitted.

The NWDAF 11k analyzes the utilization status information and the weather forecast information to generate the second information (<3> in FIG. 4). For example, the NWDAF 11k generates communication control information (e.g., information prompting to increase the communication traffic in a predetermined time period) from the utilization status information and the weather forecast information.

The NWDAF 11k transmits the communication control information to the external server 12b and the UE 2 (<4> in FIG. 4). Each of the external server 12b and the UE 2 performs communication control based on the communication control information (<5> in FIG. 4). For example, the communication control information can include information indicating to remove limitations on data types (prompting to increase the communication traffic) in areas and time periods in which a sufficient amount of renewable energy is available. In this case, the external server 12b and the UE 2 transmit all types of data. The communication control information can include information indicating to transmit low-delay data and to stop transmission of data other than the low-delay data (prompting to reduce the communication traffic) in areas and time periods in which there is not enough renewable energy available. In this case, the external server 12b and the UE 2 transmit only low-delay data.

In an example of the configuration for the communication control, a threshold for the available amount of renewable energy is set in advance. When the available amount is larger than the threshold, the communication control information may be transmitted so that each of the external server 12b and the UE 2 transmits packets without limitation. When the available amount is less than the threshold, a limitation is set on the packet transmission. In another example of the configuration for the communication control, the utilization rate of the renewable energy is divided into several stages and the types of data that can be transmitted are defined for each stage, so that the type of data is transmitted based on the utilization rate.

In still another example of the configuration for the communication control, the NWDAF 11k transmits the communication control information when the base station 3A, the UPF 11a, etc. are changed (communication path is changed) due to a handover of the UE 2 etc.

The NWDAF 11k may use a location information prediction function to find the base station 3A and the UPF 11a that are to be used by the UE 2 in the future and use them for the communication control in the future.

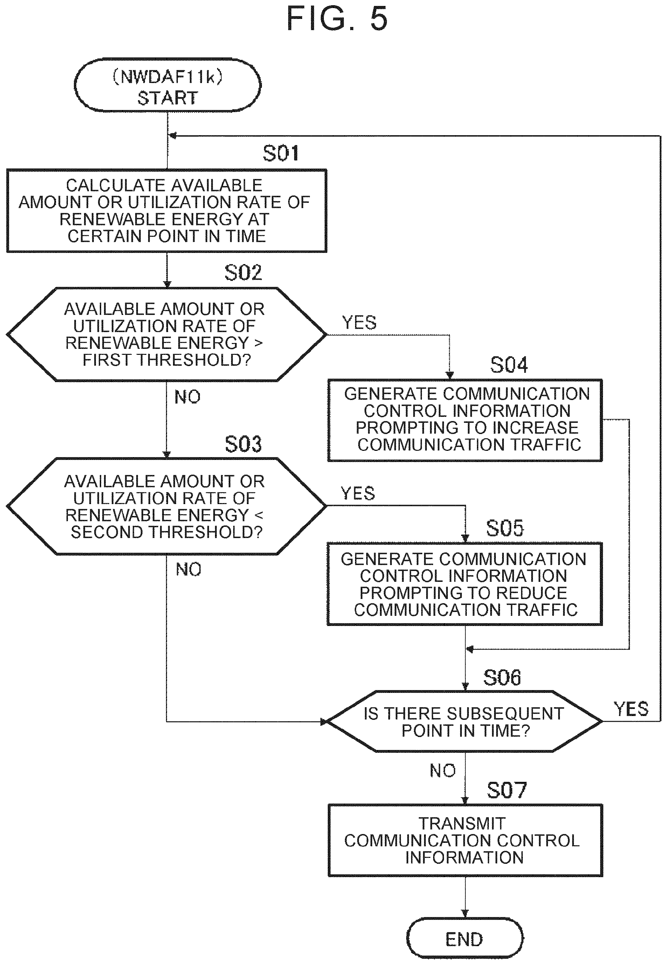

FIG. 5 is a flowchart showing an example of a process of the information processing device 20 operating as the NWDAF 11k. FIG. 5 shows an example of the analysis process in the NWDAF 11k (<3> in FIG. 4). The process shown in FIG. 5 is performed by the processor 21 of the information processing device 20.

In step S01, the processor 21 calculates information indicating the available amount or utilization rate (utilization status) of the renewable energy at a certain point in time. The certain point in time refers to a current point in time and one or more future points in time. The number of future points in time is set in advance. In the present embodiment, it is set to predict 30 minutes from the current point in time and one hour from the current point in time. In the first step S01, information indicating the utilization status at the current point in time is calculated.

In step S02, the processor 21 determines whether the value indicating the available amount or utilization rate of the renewable energy is higher than the first threshold (more than the first threshold). When determination is made that the value indicating the available amount or utilization rate of the renewable energy is higher than the first threshold, the process proceeds to step S04. Otherwise, the process proceeds to step S03.

In step S03, the processor 21 determines whether the value indicating the available amount or utilization rate of the renewable energy is lower than the second threshold (less than the second threshold). When determination is made that the value indicating the available amount or utilization rate of the renewable energy is lower than the second threshold, the process proceeds to step S05. Otherwise, the process proceeds to step S06.

In step S04, the processor 21 generates communication control information prompting to increase the communication traffic in a time period including the certain point in time, and the process proceeds to step S06. The communication control information can include, for example, information indicating to increase or maintain the transmission rate in this time period, or information indicating to resume communication.

In step S05, the processor 21 generates communication control information prompting to reduce the communication traffic in a time period including the certain point in time, and the process proceeds to step S06. The communication control information is, for example, information indicating to reduce the transmission rate or temporarily stop communication in this time period.

In step S06, the processor 21 determines whether there is a subsequent point in time for which steps S01 to S05 should be performed (in the present embodiment, 30 minutes later and one hour later). When determination is made that there is a subsequent point in time, the process returns to step S01. Otherwise, the process proceeds to step S07. When the process returns to step S01, a predicted value of the available amount or utilization rate of the renewable energy at the subsequent point in time (e.g., 30 minutes from the current point in time) is calculated based on the weather forecast information.

In step S07, the processor 21 transmits the communication control information for each point in time to a predetermined destination (e.g., at least one of the external server 12b and the UE 2). Thereafter, the process shown in FIG. 5 ends.

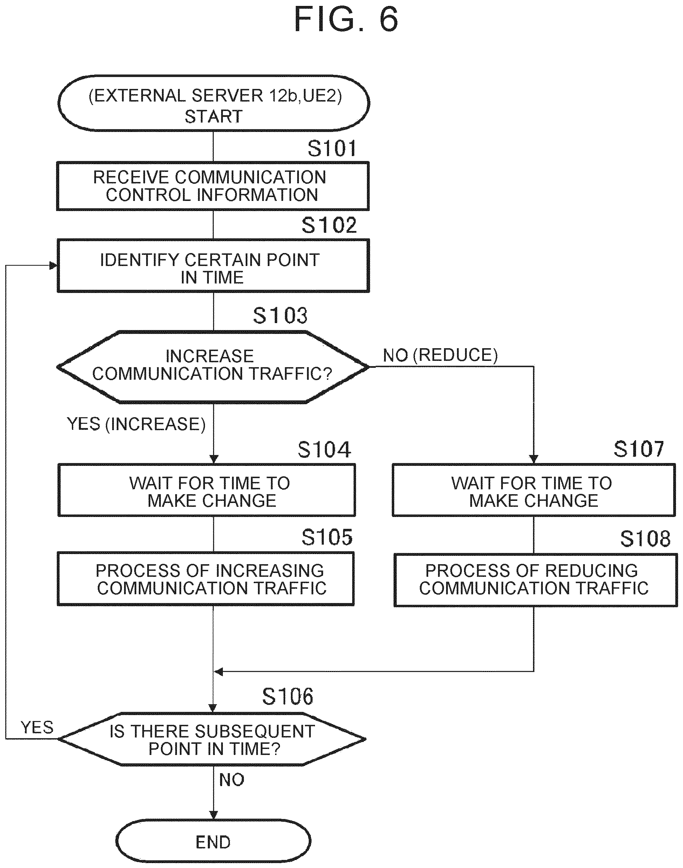

FIG. 6 is a flowchart showing an example of a process of the information processing device 20 operating as the external server 12b or the terminal 40 operating as the UE 2. FIG. 6 shows an example of the communication control in the external server 12b or the UE 2 (<5> in FIG. 4). The process shown in FIG. 6 is performed by the processor 21 of the information processing device 20 (external server 12b) or the processor 41 of the terminal 40 (UE 2). The following description illustrates the process that is performed by the processor 21 of the information processing device 20. The same applies to the process that is performed by the processor 41.

In step S101, the processor 21 receives the communication control information. In step S102, the certain point in time included in the communication control information is identified. In the present embodiment, the processor 21 identifies the current point in time, 30 minutes from the current point in time, and one hour from the current point in time. The current point in time is identified in the first S102.

In step S103, determination is made as to whether the communication control for the point in time identified in step S102 is to increase the communication traffic. When determination is made that the communication control is to increase the communication traffic, the process proceeds to step S104. Otherwise (when determination is made that the communication control is to reduce the communication traffic), the process proceeds to step S107.

In step S104, the processor 21 waits for the time to make a change to come. Namely, the processor 21 waits for the current point in time to reach the start time of the time period corresponding to the point in time identified in step S102.

In step S105, the processor 21 performs a process of increasing the communication traffic by increasing the transmission rate of packets, removing limitations on types of packets that can be transmitted, etc. When the transmission rate has reached its upper limit or when the limitations have already been removed, the transmission rate or the state in which the limitations have been removed is maintained. The process then proceeds to step S106.

In step S106, the processor 21 determines whether there is a subsequent point in time for which steps S102 to S105, S107 to S108 should be performed (in the present embodiment, 30 minutes later and one hour later). When determination is made that there is a subsequent point in time, the process returns to step S102. Otherwise, the process of FIG. 6 ends. When the process returns to step S102, the subsequent point in time (e.g., 30 minutes from the current point in time) is identified, and step S103 and the subsequent steps are performed.

In step S107, the processor 21 waits for the time to make a change to come. Namely, the processor 21 waits for the current point in time to reach the start time of the time period corresponding to the point in time identified in step S102.

In step S108, the processor 21 performs a process of reducing the communication traffic by reducing the transmission rate of packets, limiting types of packets that can be transmitted (tightening the limitations), temporarily stopping transmission of packets, etc. When the transmission rate has reached its lower limit, when the limitations have already been placed, or when transmission of packets has been temporarily stopped, the transmission rate or the state in which the limitations have been placed or transmission of packets have been temporarily stopped is maintained. The process then proceeds to step S106.

### Policy Control Depending on Utilization Status of Renewable Energy

In the 5G network shown in FIG. 1A, the AMF 1 1b provides authentication, authorization, mobility management, etc. of the UE 2. The AMF 11b controls the SMF 11c. The SMF 11c manages the PDU sessions (hereinafter referred to as "sessions") of the UE 2, allocates an IP address, and selects and controls the UPF 11a for data (user packet) transfer.

A session via the UPF 11a is established between the UE 2 and the DN 5, and one or more service data flows (SDFs) are set within the session. When the UE 2 establishes a plurality of sessions, the sessions are managed independently and different SMFs 11c can be assigned to the sessions in order to utilize different NFs 11 for the respective sessions. In the 5GC 1, management related to the UE 2 is performed by one AMF 11b, and traffic is handled by the SMF 11c for each individual network slice.

The PCF 11d can set policy and charging control (PCC) rules for proper operations of the AMF 11b and the SMF 11c, and define a process to be applied to packets associated with a specific SDF. The PCC rules are provided to the SMF 11c that manages the session, and the SMF 11c performs policy and charging control in accordance with the PCC rules and controls the operation of the UPF 11a so that the QoS set for the session is satisfied.

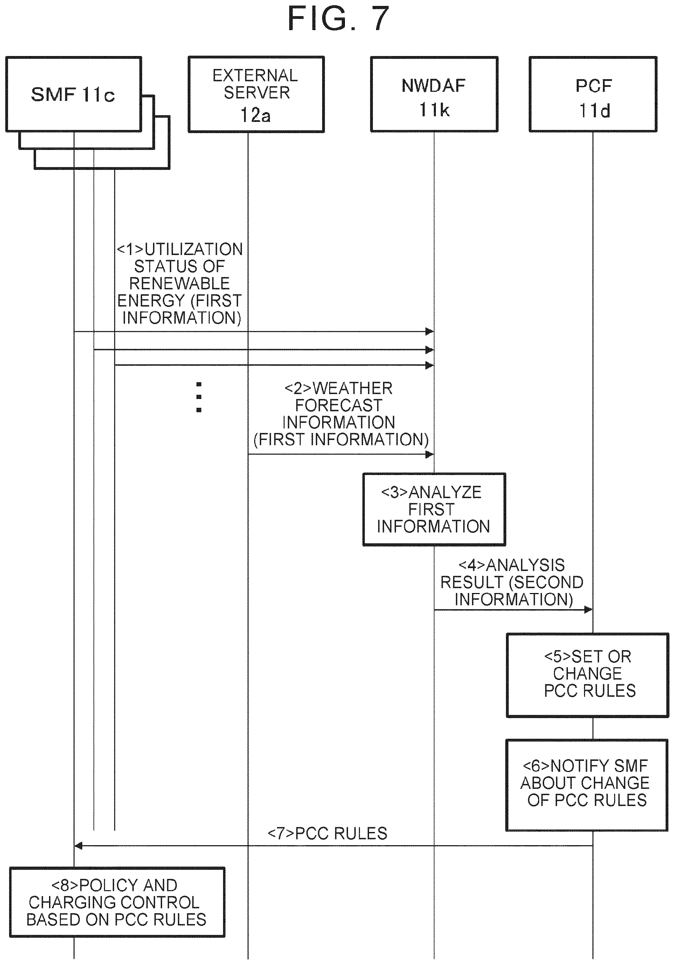

The PCC rules are set, for example, by setting parameters defined in TS 23.503 Table 6.3.1. FIG. 7 is a sequence diagram showing a process related to change of the PCC rules. In the example shown in FIG. 7, a predetermined transmission source (NF 11 such as SMF 11c or UPF 11a) periodically (or irregularly (when an event occurs)) transmits utilization status information of renewable energy to the NWDAF 11k (<1> in FIG. 7). The external server 12a transmits weather forecast information to the NWDAF 11k (<2> in FIG. 7).

The NWDAF 11k analyzes the utilization status information and the weather forecast information (first information) and calculates the available amount or utilization rate of the renewable energy (<3> in FIG. 7).

The NWDAF 11k has (stores) one or more thresholds related to the available amount or utilization rate of the renewable energy. When the available amount or utilization rate is higher or lower than the threshold, information indicating the available amount or utilization rate (information indicating an analysis result, corresponding to the second information) is transmitted to the PCF 11d (<4> in FIG. 7). Unlike the process in FIG. 7, the PCF 11d may request the NWDAF 11k to provide information, and receive the information indicating the available amount or utilization rate.

The PCF 11d receives the information from the NWDAF 11k and sets new PCC rules or changes its own PCC rules (currently set PCC rules) (<5> in FIG. 7). Among the parameters that constitute the PCC rules, the following parameters are set or changed (updated) based on the result of comparison (analysis) between the available amount or utilization rate of the renewable energy and the threshold. The following parameters are illustrative, and parameters other than these may also be updated.
- Maximum UL bit rate: maximum uplink bit rate allowed by SDF
- Maximum DL bit rate: maximum downlink bit rate allowed by SDF
- Guaranteed UL bit rate: guaranteed uplink bit rate allowed by SDF
- Guaranteed DL bit rate: guaranteed downlink bit rate allowed by SDF
- Priority level: indicating priority in scheduling resources in QoS flow
- Instruction for exclusion from session level monitoring: indicating exclusion of SDF from monitoring of PDU session utilization status
- Maximum UL packet loss rate: maximum value of packet loss rate that can be tolerated on SDF uplink
- Maximum DL packet loss rate: maximum value of packet loss rate that can be tolerated on SDF downlink
- Reporting frequency: defining frequency of reporting of event triggers etc.
- User plane latency (delay time): time required for user packet to reach destination from source

For example, when the value indicating the utilization status is higher than the threshold (when there is a sufficient amount of renewable energy), the bit rate is increased to increase the amount of packets per unit time, thereby increasing the utilization rate of the renewable energy. When the value indicating the utilization status is lower than the threshold (when there is not enough renewable energy), the bit rate, the priority, the reporting frequency, the delay time, the packet loss rate, or throughput is reduced (lessened). Alternatively, the monitoring is stopped. These reduce the power consumption required for packet processing.

The PCF 11d notifies the SMF 11c about information on the set or updated PCC rules (<6> and <7> in FIG. 7). The SMF 11c performs policy and charging control based on the set or updated PCC rules. When there is a sufficient amount of renewable energy, a process of promoting its consumption is performed. When there is not enough renewable energy, the load of the process is reduced, and the use of energy other than the renewable energy is reduced. The renewable energy can thus be suitably used.

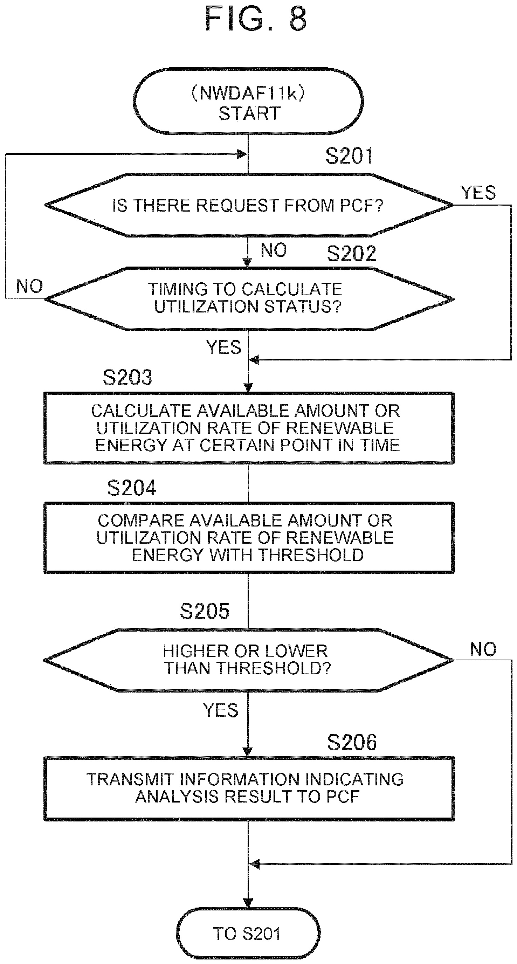

FIG. 8 is a flowchart showing an example of a process of the information processing device 20 operating as the NWDAF 11k. FIG. 8 shows an example of the process of <3> in FIG. 7. The process shown in FIG. 8 is performed by the processor 21 of the information processing device 20 (NWDAF 11k).

In step S201, the processor 21 determines whether there is an information provision request from the PCF 11d. When determination is made that there is an information provision request, the process proceeds to S203. Otherwise, the process proceeds to step S202.

In step S202, the processor 21 determines whether a timing to calculate the utilization status has come. When determination is made that the timing to calculate the utilization status has come, the process proceeds to step S203. Otherwise, the process returns to step S201.

In step S203, the processor 21 uses the information received from the SMF 11c etc. to calculate the available amount or utilization rate of the renewable energy at a certain point in time. In step S204, the processor 21 compares the available amount or utilization rate calculated in step S203 with the threshold held (stored) in advance.

In step S205, determination is made as to whether the available amount or utilization rate is either higher or lower than the threshold. When determination is made that the available amount or utilization rate is either higher or lower than the threshold, the process proceeds to step S206. Otherwise, the process of FIG. 8 ends.

In step S206, the processor 21 transmits, to the PCF 11d, information indicating an analysis result (information indicating that the available amount or utilization rate is either higher or lower than the threshold).

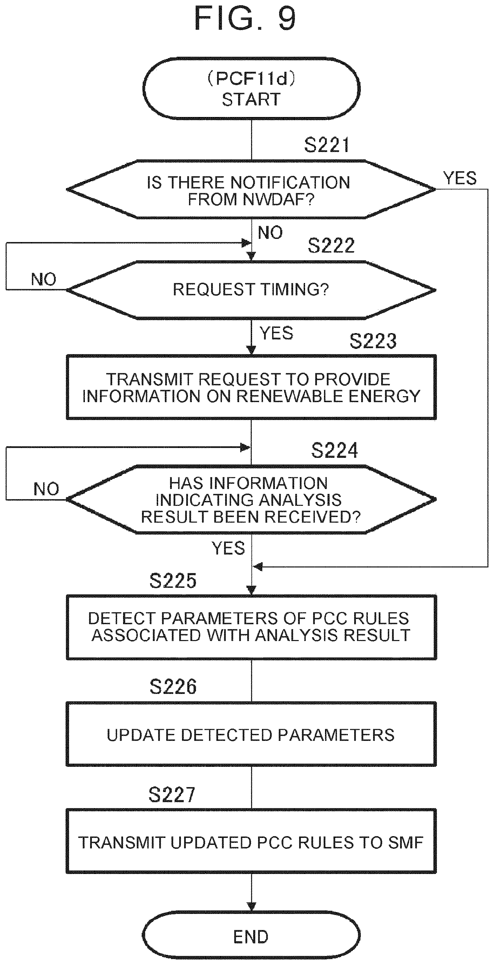

FIG. 9 is a flowchart showing an example of a process that is performed by the processor 21 of the information processing device 20 operating as the PCF 11d. In step S221, the processor 21 determines whether there is a notification of the analysis result from the NWDAF 11k. When determination is made that there is a notification of the analysis result, the process proceeds to step S225. Otherwise, the process proceeds to step S222.

In step S222, the processor 21 waits for the timing to transmit an information provision request to come. When the request timing comes, the processor 21 transmits the provision request (step S223).

In step S224, the processor 21 waits for reception of information indicating the analysis result. When determination is made that the information indicating the analysis result is received, the process proceeds to step S225.

In step S225, the processor 21 detects (identifies) parameters of the PCC rules associated with the analysis result. The storage device 22 prestores setting values of parameters of the PCC rules associated with the available amounts or utilization rates (plurality of stages (classes)) as the analysis results. In step S226, the processor 21 reads corresponding setting values and updates the PCC rules with the read values.

In step S227, the processor 21 transmits the updated PCC rules to the SMF 11c. Then, the SMF performs policy control and QoS control using the transmitted PCC rules.

The PCF 11d can change policy settings related to the communication route of the UE 2 according to the utilization status of the renewable energy. In order to operate applications on network slices more efficiently, the PCF 11d supports user equipment route selection policies (URSP, a function to direct applications and services with specific requirements to defined specific slices) based on the 3GPP standard specifications.

For example, a policy for selecting a route through the 5G network and a policy for selecting a route that offloads to a non-5G network (wireless LAN such as Wi-Fi) are prepared in advance as the policies (URSP rules) related to the route of traffic of the UE 2. The PCF 11d can set such URSP rules according to the utilization status of the renewable energy. For example, when the available amount or utilization rate of the renewable energy is lower than the threshold, the PCF 11d sets a URSP rule for selecting a route through a non-5G network. The packet traffic of the UE 2 can thus be offloaded.

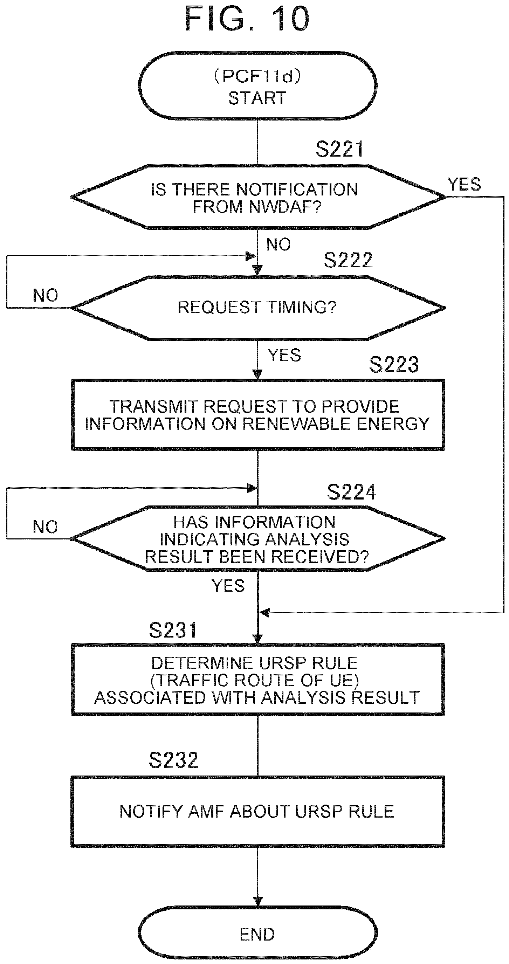

FIG. 10 is a flowchart showing an example of a process of the information processing device 20 operating as the PCF 11d. In FIG. 10, steps S221 to S224 are the same as those shown in FIG. 9. Therefore, description thereof will be omitted. In step S231, the processor 21 determines the URSP rule associated with the analysis result (the value indicating the utilization status of the renewable energy (available amount or utilization rate) is higher or lower than the threshold) regarding the traffic (PDU session) of the UE 2. That is, when determination is made that the available amount or utilization rate of the renewable energy is higher than the threshold, the PCF 11d determines a URSP rule for selecting a route of the traffic of the UE 2 through the 5G network. When determination is made that the available amount or utilization rate of the renewable energy is lower than the threshold, the PCF 11d determines a URSP rule for selecting a route that offloads the traffic of the UE 2 to a non-5G network.

In step S232, the AMF 1 1b is notified about the determined URSP rule. The AMF 1 1b controls the UE 2 and the traffic of the UE 2 is set to the route (slice) in accordance with the URSP rule.

### Functions and Effects of Embodiment

In the information processing system according to the embodiment, the information processing device 20 (first component) that operates as the NWDAF 11k of the 5G network (cellular network) acquires information indicating the utilization status of the renewable energy in the operation of the 5G network. The information processing device 20 (second component) that operates as the PCF 11d of the 5G network sets policies related to communication of the UE 2 (terminal) connected to the 5G network depending on the utilization status of the renewable energy.

The NWDAF 11k notifies the PCF 11d when the value indicating the utilization status of the renewable energy (available amount or utilization rate) is higher or lower than the threshold. In response to the notification, the PCF 11d can change at least one of the communication parameters included in the policies to a value associated with the value indicating the utilization status of the renewable energy.

The communication parameters may include at least one of a bit rate, priority, necessity of terminal communication monitoring, a delay time, a packet loss rate, and a reporting frequency regarding terminal communication. By changing the communication parameter, it is possible to actively perform the process related to communication of the UE 2 using the renewable energy, or to reduce the consumption of energy other than the renewable energy.

In the information processing system according to the embodiment, the PCF 11d can determine the policy (URSP rule) related to the route of the traffic of the UE (terminal communication route) depending on the information indicating the utilization status of the renewable energy. Therefore, when there is not enough renewable energy, the route is set to a route that offloads the traffic of the UE 2 to a non-5G network. This reduces the consumption of energy other than the renewable energy. When there is a sufficient amount of renewable energy, the route is set to a route of the traffic of the UE 2 through the 5G network. The renewable energy can thus be suitably used.

The above embodiment and modifications are merely illustrative, and the present disclosure can be modified as appropriate without departing from the spirit and scope of the present disclosure. The processes and means described in the present disclosure can be combined as desired as long as no technical contradiction occurs.

Any process described as being performed by a single device may be performed in a distributed manner by a plurality of devices. Alternatively, the processes described as being performed by different devices may be performed by a single device. In a computer system, the hardware configuration (server configuration) that implements functions can be flexibly changed.

The present disclosure can also be implemented by supplying computer programs that implement the functions described in the above embodiment to a computer and causing one or more processors of the computer to read and execute the computer programs. Such computer programs may be provided to the computer by a non-transitory computer-readable storage medium that can be connected to a system bus of the computer, or may be provided to the computer via a network. Examples of the non-transitory computer-readable storage medium include: any type of disk or disc such as a magnetic disk (floppy (registered trademark) disk, hard disk drive (HDD), etc.) and an optical disc (compact disc read-only memory (CD-ROM), digital versatile disc (DVD), Blu-ray disc, etc.); and any type of medium suitable for storing electronic instructions such as a read-only memory (ROM), a random access memory (RAM), an erasable programmable read-only memory (EPROM), an EEPROM, a magnetic card, a flash memory, and an optical card.

## Claims

1. An information processing method comprising:
acquiring, by a first component (11, 3A, 12) of a cellular network, information indicating a utilization status of renewable energy in operation of the cellular network; and
changing, by a second component (11k) of the cellular network, a policy related to communication of a terminal connected to the cellular network depending on the information indicating the utilization status of the renewable energy.

2. The information processing method according to claim 1, further comprising:
giving, by the first component (11, 3A, 12), a notification to the second component (11k) when a value indicating the utilization status of the renewable energy is higher than a threshold; and
changing, by the second component (11k), at least one of communication parameters included in the policy to a value that corresponds to the value indicating the utilization status of the renewable energy in response to the notification.

3. The information processing method according to claim 1, further comprising:
giving, by the first component (11, 3A, 12), a notification to the second component (11k) when a value indicating the utilization status of the renewable energy is lower than a threshold; and
changing, by the second component (11k), at least one of communication parameters included in the policy to a value that corresponds to the value indicating the utilization status of the renewable energy in response to the notification.

4. The information processing method according to claim 2 or 3, wherein the communication parameters include at least one of a bit rate, priority, necessity of terminal communication monitoring, a delay time, a packet loss rate, and a reporting frequency, regarding the communication of the terminal.

5. The information processing method according to any preceding claim, further comprising determining, by the second component (11k), a policy on a route of the communication of the terminal depending on the information indicating the utilization status of the renewable energy.

6. The information processing method according to claim 5, further comprising determining, by the second component (11k), a policy on a route of the communication of the terminal through the cellular network when determination is made that an available amount or a utilization rate of the renewable energy that is the information indicating the utilization status of the renewable energy is higher than a threshold.

7. The information processing method according to claim 5, further comprising determining, by the second component (11k), a policy on a route that offloads the communication of the terminal to a non-cellular network when determination is made that an available amount or a utilization rate of the renewable energy that is the information indicating the utilization status of the renewable energy is lower than a threshold.

8. The information processing method according to any preceding claim, wherein the first component (11, 3A, 12) is a device configured to operate as a network data analytics function of the cellular network.

9. The information processing method according to any preceding claim, wherein the second component (11k) is a device configured to operate as a policy control function of the cellular network.

10. An information processing system comprising:
a first component (11, 3A, 12) of a cellular network, the first component (11, 3A, 12) being configured to acquire information indicating a utilization status of renewable energy in operation of the cellular network; and
a second component (11k) of the cellular network, the second component (11k) being configured to change a policy related to communication of a terminal connected to the cellular network depending on the information indicating the utilization status of the renewable energy.

11. The information processing system according to claim 10, wherein:
the first component (11, 3A, 12) is configured to give a notification to the second component (11k) when a value indicating the utilization status of the renewable energy is higher than a threshold; and
the second component (11k) is configured to change at least one of communication parameters included in the policy to a value corresponding to the value indicating the utilization status of the renewable energy in response to the notification.

12. The information processing system according to claim 10, wherein:
the first component (11, 3A, 12) is configured to give a notification to the second component (11k) when a value indicating the utilization status of the renewable energy is lower than a threshold; and
the second component (11k) is configured to change at least one of communication parameters included in the policy to a value corresponding to the value indicating the utilization status of the renewable energy in response to the notification.

13. The information processing system according to claim 11 or 12, wherein the communication parameters include at least one of a bit rate, priority, necessity of terminal communication monitoring, a delay time, a packet loss rate, and a reporting frequency, regarding the communication of the terminal.

14. A non-transitory storage medium storing a program for causing an information processing device to operate as the first component (11, 3A, 12) according to any of claims 10 to 13.

15. A non-transitory storage medium storing a program for causing an information processing device to operate as the second component (11k) according to any of claims 10 to 14.
